# FASCICULE DE BREVET EUROPEEN

(11) **EP 3 717 298 B1**
(45) Date de publication et mention de la délivrance du brevet: **27.12.2023**
(21) Numéro de dépôt: 18819530.9
(22) Date de dépôt: 09.11.2018
(51) Int. Cl.: B60L 15/20, H02P 25/24, H02P 6/00, B60W 20/00, B60W 50/00

(54) **MOTEUR À RÉGLAGE PRÉDICTIF, CONTRÔLEUR DE MOTEUR ET PROCÉDÉ DE RÉGLAGE AUTOMATIQUE DE MOTEUR**
MOTOR MIT PRÄDIKTIVER REGELUNG, MOTORSTEUERUNG UND VERFAHREN ZUR AUTOMATISIERTEN MOTORREGELUNG
MOTOR WITH PREDICTIVE REGULATION, MOTOR CONTROLLER AND METHOD FOR AUTOMATED MOTOR REGULATION

(30) Priorité: 30.11.2017 FR 1761476
(43) Date de publication de la demande: 07.10.2020
(73) Titulaire: Orange, 92130 Issy-les-Moulineaux (FR)
(72) Inventeur: ESNAULT, Régis, 92326 Châtillon Cedex (FR); LOUIS DIT PICARD, Stéphane, 92326 Châtillon Cedex (FR); CORREA, William, 92326 Châtillon Cedex (FR)
(86) Numéro de dépôt international: PCT/FR2018/052786
(87) Numéro de publication internationale: WO 2019/106252

(56) Documents cités:
- EP-A1- 1 713 171
- EP-A1- 3 015 333
- WO-A1-2011/128410
- DE-A1-102013 223 525
- FR-A1- 3 012 528
- US-A1- 2004 263 099
- US-B1- 6 208 931

## Description

L'invention concerne le domaine des transports, notamment automobile. L'invention porte sur un moteur à réglage prédictif et notamment sur un contrôleur de moteur d'un véhicule, notamment apte à régler automatiquement un paramètre physique d'un moteur, tel que la largeur de l'entrefer d'un moteur électrique, etc.

Le moteur électrique est un dispositif électromécanique permettant de transformer l'énergie électrique en énergie mécanique. Un moteur électrique est composé principalement d'un stator fixe et d'un rotor qui tourne. Le stator entoure le rotor et génère un champ magnétique qui le traverse. Le rotor est constitué de bobine de fils conducteurs placés à la périphérie d'un axe tournant. La façon de disposer les fils conducteurs permet de créer des forces. Ces dernières constitueront le couple moteur. Plus le couple est élevé, plus la puissance libérée au démarrage est grande.

Il existe plusieurs générations de moteurs électriques. Les premiers furent les moteurs à courant continu dont le rendement limité à 90%. Ils posaient des problèmes notamment liés à une vitesse de rotation élevée et à de pertes thermiques situées au rotor. La deuxième génération utilisées pour la propulsion des automobiles utilisa des moteurs à induction ou asynchrones plus robuste. Le glissement magnétique permettant la création du couple implique des pertes au niveau du rotor d'où un rendement qui plafonne à 82% et qui chute rapidement à 75%. La troisième génération est le moteur synchrone qui même si potentiellement moins robuste s'impose dans la plupart des cas. C'est historiquement le moteur utilisé par l'alternateur des véhicules à propulsion thermique (essence, diesel). Dans cette troisième génération, deux familles sont en compétition : le moteur synchrone à rotor bobiné, et le moteur à aimants permanents.

Ces moteurs sont utilisés aussi bien sur les véhicules électriques que sur les véhicules hybrides. La demande internationale WO2011128410 décrit un système de motorisation hybride dans lequel un dispositif de commande permet de commander la bascule entre le moteur thermique et le moteur électrique en fonction d'information relative à la route et à la circulation pour le segment de parcours directement devant le véhicule d'un itinéraire calculé. Le rendement du moteur en cours d'utilisation n'est pas toujours optimal car le moteur conserve le même fonctionnement quel que soit le trajet parcouru.

Aujourd'hui, le réglage de la vitesse des roues est effectué grâce, notamment, à un différentiel mécanique permettant de régler la vitesse de rotation fournie par l'énergie mécanique en sortie du moteur aux roues du véhicule par l'intermédiaire de la transmission. Par exemple, une boite de vitesse automatique comporte un tel différentiel mécanique. L'inconvénient d'une telle technique de réglage de la vitesse de rotation en sortie d'un moteur électrique sont les pertes de rendement liées à la transmission mécanique malgré l'avantage de pouvoir régler la vitesse en sortie du moteur ce qui jusqu'à aujourd'hui n'est pas possible sur un moteur roue.

Le brevet américain US6,208,931 propose d'optimiser le rendement du moteur en régulant la distribution d'énergie en fonction de données captées pendant le parcours. Ainsi, l'optimisation est effectuée avec un retard correspondant au temps de traitement des données captées pour calculer la régulation de la distribution d'énergie. En plus, l'optimisation est limitée puisque seule la distribution d'énergie est régulée.

Un des buts de la présente invention est d'apporter des améliorations par rapport à l'état de la technique.
Un objet de l'invention est un moteur à réglage prédictif d'un véhicule comportant au moins un paramètre physique apte à être réglé en fonction d'une donnée caractéristique prédite du parcours actuel du véhicule à partir de données fournies par au moins un capteur du moteur du véhicule, caractérisé en ce que le moteur est un moteur électrique (5') comportant un rotor (511) et un stator (512) séparé par un entrefer (513) dont la largeur constitue le paramètre physique réglable.
Ainsi, le moteur est réglé automatiquement en fonction de donnée caractéristique prédite du parcours actuel à partir de données d'un capteur moteur ce qui permet d'optimiser l'utilisation du moteur, tel que le moteur thermique ou le moteur électrique, notamment la consommation (par exemple, la consommation électrique), le rendement de transmission, l'échauffement du rotor du moteur électrique, etc., quel que soit le parcours notamment sur une route dégradée ou dans des virages... en prenant en considération différentes caractéristiques relatives aux parcours tels que la vitesse, l'état de la chaussée, et pour le moteur électrique : la largeur de l'entrefer , la température du rotor, etc.
Un objet de l'invention est également un contrôleur apte à régler automatiquement au moins un paramètre physique d'un moteur d'un véhicule en fonction d'une donnée caractéristique prédite du parcours actuel du véhicule à partir de données fournies par des capteurs du véhicule, caractérisé en ce que le paramètre physique d'un moteur est la largeur d'un entrefer d'un moteur électrique.
Avantageusement, le contrôleur comporte au moins un transmetteur de commande de largeur de l'entrefer à un régulateur installé dans le véhicule, la largeur commandée étant fonction d'une donnée caractéristique prédite du parcours actuel du véhicule.
Un objet de l'invention est aussi un procédé de réglage automatique d'un moteur d'un véhicule en fonction d'une donnée caractéristique prédite du parcours actuel du véhicule à partir de données fournies par des capteurs du moteur du véhicule, caractérisé en ce que le paramètre physique d'un moteur est la largeur d'un entrefer d'un moteur électrique.
Ainsi, le procédé de réglage automatique commande directement le moteur en fonction de donnée caractéristique prédite du parcours actuel à partir de données d'un capteur moteur ce qui permet d'optimiser l'utilisation du moteur, tel que le moteur électrique, notamment la consommation électrique, le rendement de transmission, l'échauffement du rotor, etc., quel que soit le parcours notamment sur une route dégradée ou dans des virages... en prenant en considération différentes caractéristiques relatives aux parcours tels que la vitesse, l'état de la chaussée, la largeur de l'entrefer, la température du rotor, etc.

Avantageusement, la donnée caractéristique prédite est fonction d'un historique du moteur associant au moins un paramètre physique du moteur lors d'un parcours précédent à au moins une donnée caractéristique du parcours précédent.

Ainsi, le réglage tient compte non seulement de données caractéristiques propres au parcours : type de chaussée, type de tracé... mais aussi de données relatives au système véhicule-conducteur ou véhicule/pilote puisqu'il tient compte de données relatives à des parcours précédents (vitesse, trajectoire... en fonction du type de chaussé et/ou de tracé...).

Avantageusement, la donnée caractéristique est prédite en utilisant un modèle élaboré par apprentissage automatique.

Ainsi, si le véhicule n'a pas encore emprunté le trajet actuel ou du moins pas dans les conditions actuelles (modification de l'état de la chaussée, de trajectoire...), un modèle élaboré par apprentissage automatique en fonction de parcours précédents permet néanmoins d'adapter le véhicule au parcours actuel.

Avantageusement, l'apprentissage automatique est réalisé à partir d'un historique du moteur associant au moins un paramètre du moteur lors d'un parcours précédent à au moins une donnée caractéristique du parcours précédent.

Avantageusement, le procédé de réglage comporte une prédiction du parcours actuel du véhicule à partir de données fournies par des capteurs du moteur du véhicule.

Avantageusement, le procédé de réglage automatique comporte une génération d'un historique du moteur associant au moins un paramètre physique du moteur lors d'un parcours précédent à au moins une donnée caractéristique du parcours précédent.

Avantageusement, le procédé de réglage automatique comporte un apprentissage automatique à partir de l'historique généré fournissant un modèle de comportement du moteur.

Avantageusement, le procédé de réglage automatique comporte une estimation du parcours actuel en fonction de l'historique généré, le parcours actuel estimé fournissant au moins la donnée caractéristique prédite du parcours actuel.

Avantageusement, une donnée caractéristique de parcours actuel comporte au moins un élément parmi les suivants :
- vitesse du véhicule,
- qualité de la route,
- type de tracé.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un contrôleur d'un moteur et étant conçus pour commander l'exécution des différentes étapes de ce procédé.

L'invention vise donc aussi un programme comprenant des instructions de code de programme pour l'exécution des étapes du procédé de réglage automatique lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Les caractéristiques et avantages de l'invention apparaîtront plus clairement à la lecture de la description, faite à titre d'exemple, et des figures s'y rapportant qui représentent :
- Figure 1, un schéma simplifié moteur électrique à réglage prédictif selon l'invention ;
- Figure 2, un schéma simplifié d'un contrôleur de moteur selon l'invention ;
- Figure 3, un schéma simplifié d'un procédé de réglage automatique d'un moteur selon l'invention.

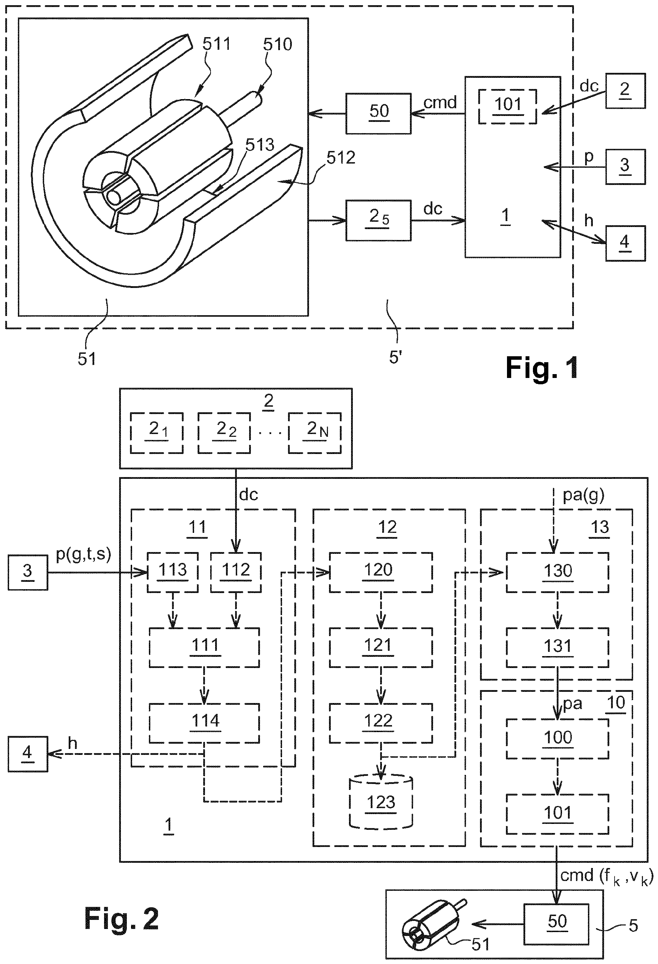

La figure 1 illustre un schéma simplifié d'un moteur à réglage prédictif selon l'invention dans le cas particulier du moteur électrique.

Un moteur électrique 5 d'un véhicule est apte à être réglé sur commande d'un contrôleur 1 en fonction d'une donnée caractéristique prédite *pc₁...pc_{M}* du parcours actuel *pa* du véhicule à partir de données de fournies par au moins un capteur 2₅ du moteur électrique 5.

En particulier, le contrôleur 1 comporte au moins un transmetteur 101 de commande de largeur de l'entrefer à un régulateur, tel qu'une carte électronique de réglage du moteur électrique 50 installé dans le véhicule (notamment dans le moteur électrique 5). La largeur commandée est fonction de la donnée caractéristique prédite du parcours actuel du véhicule.

Eventuellement, le moteur électrique 5' comporte outre le moteur proprement dit 51, le régulateur 50 et le capteur 2₅, le contrôleur 1 selon l'invention.

Un ou plusieurs capteurs 2, y compris au moins un capteur 2₅ du moteur électrique 51 du véhicule, fournissent des données captées de au contrôleur 1. Notamment, le au moins un capteur 2₅ du moteur électrique fournit des données de rendement de transmission, et éventuellement d'autre données tel qu'une température du rotor, de consommation électrique...

En particulier, le contrôleur 1 enregistre ces données avec des informations relatives au parcours durant la capture de ces données notamment sous forme d'un historique h dans un système d'historisation 4. Les informations relatives au parcours sont fournies au contrôleur 1, par exemple, par un navigateur 3.

En particulier, le contrôleur 1 utilise les données captées de du système de capture 2 (y compris du capteur 25 du moteur électrique 5), notamment en consultant les historiques h du système d'historisation 4 pour commander cmd le régulateur 50. Par exemple, le contrôleur 1 modélise le comportement du moteur électrique 5 en fonction du parcours actuel pour déterminer le réglage à effectuer.

En particulier, le moteur électrique 51 comporte un stator 512 et un rotor 511 transmettant l'énergie mécanique sous la forme d'une force de rotation à l'arbre 510 par transformation de l'énergie électrique grâce au champ magnétique généré par le rotor 511 et le stator 512. Dans le cas particulier de la régulation de la largeur de l'entrefer 513 du moteur électrique 5, le contrôleur 1 permet ainsi d'optimiser le rendement de transmission du moteur électrique 5 en fonction des données relatives aux batteries (charge, état, etc.), des données du variateur du moteur électrique, en fonction de la prédiction du parcours actuel (plus précisément de données caractéristiques prédites du parcours actuel tel que le couple, la vitesse prédites, etc.).

La figure 2 illustre un schéma simplifié d'un contrôleur de moteur selon l'invention.

Le contrôleur 1 apte à régler automatiquement au moins un moteur 5 d'un véhicule en fonction d'une donnée caractéristique prédite *pc₁...pc_{M}* du parcours actuel *pa* du véhicule à partir de données fournies *de* par au moins un capteur 2₅ du moteur 5.

Notamment, le contrôleur 1 comporte au moins un superviseur 10 apte à transmettre le réglage adapté *vk* au moteur 5.

En particulier, le contrôleur 1 comporte un calculateur 100 d'une valeur de réglage vk d'un paramètre fk du moteur 5. Ce calculateur 100 est apte à déterminer la valeur de réglage vk notamment en fonction d'une fonction ou de règles d'optimisation du moteur 5 à au moins une donnée caractéristique pc₁...pc_{M} d'un parcours. Ces règles d'optimisation sont en particulier stockées dans une base de données de règles (non illustrée). Le superviseur 10 comporte notamment ce calculateur 100.

Par exemple, pour un paramètre fk de largeur d'entrefer du moteur électrique, la valeur de réglage est calculée notamment en fonction d'optimisation du rendement de transmission et/ou de la consommation électrique du moteur électrique.

En particulier, le contrôleur 1 comporte un générateur 101 d'une commande de réglage d'un moteur cmd(f,vₖ). Cette commande *cmd* comporte notamment une valeur de réglage vk d'un paramètre fk du moteur 5. Soit le contrôleur 1 est apte à transmettre directement cette commande au paramètre fk du moteur 5 pour déclencher le réglage, soit la commande cmd comporte aussi un identifiant du paramètre fk à régler et le contrôleur 1 est apte à transmettre la commande au moteur 5 qui est apte à régler le paramètre fk à la valeur vk. Ce générateur 101 de commande est notamment implémenté dans le superviseur 10.

Notamment, le contrôleur 1 comporte au moins un enregistreur des parcours précédents 11 apte à mémoriser au moins des données captées durant au moins un parcours précédent *de* en relation avec au moins une donnée caractéristique *g,t,s* du parcours précédent *p(g,t,s).*

En particulier, le contrôleur 1 comporte un récepteur 112 de données de fournies par un ou plusieurs capteurs 2₁ ... 2_{N}, notamment un capteur du moteur 2₅ et/ou un ensemble/système de capteurs 2 comportant plusieurs capteurs 2₁ ... 2_{N} du véhicule, tel que caméra(s), capteurs des pneumatiques, accéléromètres, variateur, capteur de charge des accumulateurs/batteries, etc. Ces capteurs sont notamment des capteurs connectés dont les historiques de données sont conservés éventuellement à distance. Ce récepteur de données captées 112 est notamment implémenté dans l'enregistreur 11 des parcours précédents.

En particulier, le contrôleur 1 comporte un récepteur 113 de données relatives à un parcours *p(g,t,s)* en cours lors de la capture de données *de.* Ce récepteur 113 de données relatives au parcours est notamment implémenté dans l'enregistreur 11 des parcours précédents.

En particulier, le contrôleur 1 comporte un coupleur 111 des données de fournies par un ou plusieurs capteur 2₁ ... 2_{N}, notamment un capteur du moteur 2₅ avec des données relatives à un parcours *p(g,t,s)* en cours lors de la capture de données *de.* Les données associées constituent un historique des comportements du moteur lors des parcours précédents. Ce coupleur 111 est notamment implémenté dans l'enregistreur 11 des parcours précédents.

En particulier, le contrôleur 1 comporte un enregistreur d'un historique des comportements 114 du moteur lors des parcours précédents constitué notamment de données de fournies par un ou plusieurs capteur 2₁ ... 2_{N}, notamment un capteur du moteur 2₅ associées avec des données relatives à un parcours *p(g,t,s)* en cours lors de la capture de données *de.* L'historique est notamment enregistré dans une base de données d'historique 4. Cet enregistreur d'historique 114 est notamment implémenté dans l'enregistreur 11 des parcours précédents.

Notamment, le contrôleur 1 comporte au moins un modélisateur de parcours 12, notamment d'un véhicule prédéterminé, et éventuellement conduit par un utilisateur donné, en particulier un modélisateur du comportement du moteur.

En particulier, le contrôleur 1 comporte un dispositif d'apprentissage automatique 120. Le dispositif d'apprentissage automatique 120 utilise un historique du moteur du véhicule *h* associant au moins un paramètre *fₖ* du moteur du véhicule lors d'un parcours précédent *p* à au moins une donnée caractéristique *g, t,* s du parcours précédent *p,* notamment un historique généré par le coupleur 111. Eventuellement, le dispositif d'apprentissage automatique 120 récupère les historiques des parcours précédents enregistrés dans une base de données d'historiques 4. Ce dispositif d'apprentissage automatique 120 est notamment implémenté dans le modélisateur de parcours 12.

En particulier, le contrôleur 1 comporte un générateur de modèle 121 à partir du résultat du dispositif d'apprentissage automatique 120. Eventuellement, un enregistreur 122 stocke le modèle créé dans une base de données de modèle 123. Le générateur de modèle 121 et/ou son enregistreur 122 sont notamment implémentés dans le modélisateur de parcours 12.

Notamment, le contrôleur 1 comporte au moins un prédicteur de parcours 13 apte à prédire un parcours en fonction de données captées *de.*

En particulier, le contrôleur 1 comporte un chargeur de modèle 130 en fonction du parcours actuel *pa(g)* soit directement du modélisateur 12 et/ou du générateur de modèle 121 et/ou d'une base de données de modèles 123. Le parcours actuel *pa(g)* est fourni notamment par un navigateur 3, par exemple sous la forme d'une suite de coordonnées géographiques, ou de deux extrémités géographiques d'un trajet : départ et arrivée, et de routes calculées par le dispositif de navigation entre ces deux extrémités. Le navigateur 3 comporte notamment une base de données des routes, et/ou un dispositif d'accès des informations routières (travaux, bouchons, etc.), notamment via des communautés internet de type Waze (marque déposée), opendata, etc. et utilise les informations fournies par un ou plusieurs de ces dispositifs pour calculer le trajet du parcours actuel *pa.* Le chargeur de modèle 130 est notamment implémenté dans le prédicteur de parcours 13.

En particulier, le contrôleur 1 comporte un estimateur 131 du parcours actuel *ppa(pc₁...pc_{M})* à partir des données captées *de,* notamment en utilisant l'historique des parcours précédents généré et/ou du modèle généré. L'estimateur 131 de parcours est notamment implémenté dans le prédicteur de parcours 13.

En particulier, le prédicteur de parcours 13 fournit au moins une donnée caractéristique prédite *pc₁...pc_{M}* du parcours actuel, voire le parcours prédit *ppa* au superviseur 10 qui est apte à transmettre au moteur 5 un réglage adapté *vk* à au moins une donnée caractéristique prédite fournie par le prédicteur 13, notamment sous la forme d'une commande cmd(fₖ, vₖ).

En particulier, le moteur 5 du véhicule comporte au moins un dispositif parmi les suivants:
- un capteur du moteur 2₅,
- un régulateur 51, tel qu'une carte électronique de réglage du moteur apte notamment à régler la largeur de l'entrefer d'un moteur électrique, etc.

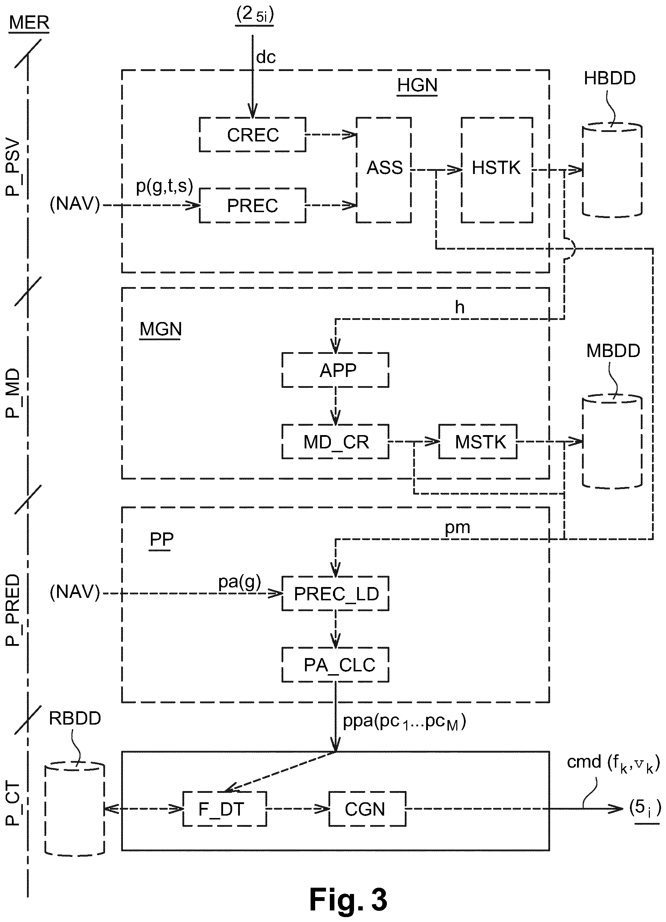

La figure 3 illustre un schéma simplifié d'un procédé de réglage automatique de moteur MER selon l'invention.

Le procédé de réglage automatique de moteur MER règle automatiquement *cmd(fₖ,vₖ)* au moins un moteur 5 d'un véhicule en fonction d'une caractéristique prédite *pc₁...pc_{M}* du parcours actuel *pa* du véhicule à partir de données *de* fournies par au moins un capteur 2₅ du moteur 5.

En particulier, la donnée caractéristique prédite *pc₁...pc_{M}* est fonction d'un historique du moteur du véhicule *h* associant au moins un paramètre *fₖ* du moteur du véhicule lors d'un parcours précédent *p* à au moins une donnée caractéristique *g, t,* s du parcours précédent *p.*

En particulier, la donnée caractéristique *pc₁...pc_{M}* est prédite en utilisant un modèle *pm* élaboré par apprentissage automatique APP.

En particulier, l'apprentissage automatique APP est réalisé à partir d'un historique du moteur du véhicule *h* associant au moins un paramètre *fₖ* du moteur du véhicule lors d'un parcours précédent *p* à au moins une donnée caractéristique *g, t, s* du parcours précédent *p.*

En particulier, le procédé de réglage automatique de moteur MER comporte une prédiction du parcours actuel du véhicule PP à partir de données de fournies par au moins un capteur 2₅ du moteur 5.

En particulier, le procédé de réglage automatique MER comporte une génération d'un historique du moteur du véhicule HGN associant au moins un paramètre *fₖ* du moteur du véhicule lors d'un parcours précédent *p* à au moins une donnée caractéristique *g, t, s* du parcours précédent *p.*

En particulier, le procédé de réglage automatique MER comporte un apprentissage automatique APP à partir de l'historique généré *h* fournissant un modèle de parcours *pm* en fonction de caractéristiques *g* du parcours *pa.*

En particulier, le procédé de réglage automatique MER comporte une estimation PP du parcours actuel en fonction de l'historique généré *h,* le parcours actuel estimé *ppa* fournissant au moins la donnée caractéristique prédite *pc₁*...*pc_{M}* du parcours actuel.

En particulier, une donnée caractéristique *pc₁...pc_{M}* de parcours actuel comporte au moins un élément parmi les suivants :
- vitesse du véhicule *s,*
- qualité de la route *qr,*
- type de tracé *t,*
- coordonnées du parcours *g*, etc.

Les données captées de fournies par un ou plusieurs capteur 2n, notamment un capteur du moteur 2₅ sont utilisées par le procédé de réglage automatique MER d'un moteur 5 pour adapter le réglage du moteur 5 en fonction au parcours actuel *pa.*

Notamment, le procédé de réglage automatique MER d'un moteur 5 comporte au moins une phase de contrôle P_CT durant laquelle le procédé de réglage automatique transmet le réglage adapté *vk* au moteur 5.

En particulier, le procédé de réglage automatique MER du moteur 5 comporte une détermination F_DT d'une valeur de réglage vk d'un paramètre fk du moteur 5. Cette détermination F_DT est effectuée notamment en fonction d'une fonction ou de règles d'optimisation du moteur 5 à au moins une donnée caractéristique pc₁...pc_{M} d'un parcours. Ces règles d'optimisation sont en particulier stockées dans une base de données de règles RBDD. Cette détermination F_DT est notamment effectuée durant la phase de contrôle P_CT.

En particulier, le procédé de réglage automatique MER du moteur 5 comporte une génération CGN d'une commande de réglage d'un moteur *cmd(fk,vk).* Cette commande *cmd* comporte notamment une valeur de réglage vk d'un paramètre fk du moteur 5. Soit le procédé de réglage MER transmet directement cette commande au paramètre fk du moteur 5 pour déclencher le réglage, soit la commande cmd comporte aussi un identifiant du paramètre fk à régler et le procédé de réglage MER transmet la commande au moteur 5 qui règle le paramètre fk à la valeur vk. Cette génération de commande est notamment effectuée durant la phase de contrôle P_CT.

Notamment, le procédé de réglage automatique MER d'un moteur 5 comporte au moins une phase d'enregistrement des parcours précédents P_PSV durant laquelle le procédé de réglage automatique mémorise au moins des données captées durant au moins un parcours précédent de en relation avec au moins une donnée caractéristique *g,t,s* du parcours précédent *p(g,t,s).*

En particulier, le procédé de réglage automatique MER d'un moteur comporte une réception CREC de données de fournies par un ou plusieurs capteurs 2n, notamment un capteur du moteur 2₅. Cette réception CREC de données captées est notamment effectuée durant la phase d'enregistrement des parcours précédents P_PSV.

En particulier, le procédé de réglage automatique MER d'un moteur comporte une réception PREC de données relatives à un parcours *p(g,t,s)* en cours lors de la capture de données de. Cette réception PREC de données relatives au parcours est notamment effectuée durant la phase d'enregistrement des parcours précédents P_PSV.

En particulier, le procédé de réglage automatique MER d'un moteur comporte une association ASS des données de fournies par un ou plusieurs capteur 2n, notamment un capteur du moteur 2₅ avec des données relatives à un parcours *p(g,t,s)* en cours lors de la capture de données de. Les données associées constituent un historique des comportements du moteur lors des parcours précédents. Cette association ASS est notamment effectuée durant la phase d'enregistrement des parcours précédents P_PSV

En particulier, le procédé de réglage automatique MER d'un moteur comporte un enregistrement HSTK d'un historique des comportements du moteur lors des parcours précédents constitué notamment de données de fournies par un ou plusieurs capteur 2n, notamment un capteur du moteur 2₅ associées avec des données relatives à un parcours *p(g,t,s)* en cours lors de la capture de données de. L'historique est notamment enregistré dans une base de données d'historique HBDD. Cet enregistrement d'historique HSTK est notamment effectué durant la phase d'enregistrement des parcours précédents P_PSV.

Eventuellement, le procédé de réglage automatique MER d'un moteur comporte une génération d'historique HGN comportant une ou plusieurs des étapes suivantes :
- une réception CREC de données de fournies par un ou plusieurs capteur 2n, notamment un capteur du moteur 2₅,
- une réception PREC de données relatives à un parcours *p(g,t,s)* en cours lors de la capture de données de, notamment lors de la réception CREC,
- une association ASS des données de fournies par un ou plusieurs capteur 2n, notamment un capteur du moteur 2₅, notamment des données fournies à la réception CREC, avec des données relatives à un parcours *p(g,t,s)* en cours lors de la capture de données *de,* notamment des données relatives au parcours reçues par la réception PREC,. Les données associées constituent un historique des comportements du moteur lors des parcours précédent.
- un enregistrement HSTK d'un historique des comportements du moteur lors des parcours précédents constitué notamment de données de fournies par un ou plusieurs capteur 2n, notamment un capteur du moteur 2₅ associées avec des données relatives à un parcours *p(g,t,s)* en cours lors de la capture de données *de.* En particulier, l'enregistrement HSTK mémorise l'historique fournie par l'association ASS.
Cette génération d'historique HGN est notamment effectuée durant la phase d'enregistrement des parcours précédents P_PSV.

Notamment, le procédé de réglage automatique MER d'un moteur 5 comporte au moins une phase de modélisation de parcours P_MD, notamment d'un véhicule prédéterminé, et éventuellement conduit par un utilisateur donné, en particulier de modélisation du comportement du moteur.

En particulier, le procédé de réglage automatique MER d'un moteur 5 comporte un apprentissage automatique APP. L'apprentissage automatique APP est réalisé à partir d'un historique du moteur du véhicule *h* associant au moins un paramètre *fₖ* du moteur du véhicule lors d'un parcours précédent *p à* au moins une donnée caractéristique *g, t, s* du parcours précédent *p,* notamment un historique généré par l'association ASS. Eventuellement, l'apprentissage automatique APP récupère les historiques des parcours précédents enregistrés dans une base de données d'historiques HBDD. Cet apprentissage automatique APP est notamment effectué durant la phase de modélisation de parcours P_MD.

En particulier, le procédé de réglage automatique MER d'un moteur 5 comporte une création d'un modèle MD_CR à partir du résultat de l'apprentissage automatique APP. Eventuellement, le modèle créé est enregistré MSTK dans une base de données de modèle MBDD. Par exemple, la base de données de modèle est distante du véhicule permettant de regrouper les modèles d'un utilisateur pour différents types de véhicules (voir différents types de moteur, différentes batteries/accumulateurs...). La création de modèle MD_CR et/ou son enregistrement MSTK sont notamment effectués durant la phase de modélisation de parcours P_MD.

Eventuellement, le procédé de réglage automatique MER d'un moteur comporte une génération de modèle MGN comportant une ou plusieurs des étapes suivantes :
- un apprentissage automatique APP est réalisé à partir d'un historique du moteur du véhicule *h* associant au moins un paramètre *fₖ* du moteur du véhicule lors d'un parcours précédent p à au moins une donnée caractéristique *g, t,* s du parcours précédent *p ;*
- une création d'un modèle MD_CR à partir du résultat de l'apprentissage automatique, et
- un enregistrement MSTK du modèle créé.
La génération de modèle MGN est notamment effectuée durant la phase de modélisation de parcours P_MD.

Ainsi, lorsqu'un utilisateur s'installe au volant d'un véhicule, le modèle préalablement créé correspondant peut être chargé PREC_LD pour la prédiction de données caractéristiques, plus généralement pour l'estimation du parcours actuels PA_CLC.

Notamment, le procédé de réglage automatique MER d'un moteur 5 comporte au moins une phase de prédiction de parcours P_PRED durant laquelle un parcours est prédit en fonction de données captées de.

En particulier, le procédé de réglage automatique de moteur MER comporte un chargement d'un modèle PREC_LD en fonction du parcours actuel *pa(g)* soit directement de la génération de modèle MGN et/ou de la création de modèle MD_CR et/ou d'une base de données de modèles MBDD. Le parcours actuel *pa(g)* est fourni notamment par un dispositif de navigation NAV, par exemple sous la forme d'une suite de coordonnées géographiques, ou de deux extrémités géographiques d'un trajet : départ et arrivée, et de routes calculées par le dispositif de navigation entre ces deux extrémités. Le chargement de modèle PREC_LD est notamment effectuée durant la phase de prédiction de parcours P_PRED.

En particulier, le procédé de réglage automatique de moteur MER comporte une estimation PA_CLC du parcours actuel *ppa(pc₁...pc_{M})* à partir des données captées *de,* notamment en utilisant l'historique des parcours précédents généré HGN, ASS et/ou du modèle généré MGN, MD_CR. L'estimation de parcours est notamment effectuée durant la phase de prédiction de parcours P_PRED.

En particulier, le procédé de réglage automatique de moteur MER comporte une prédiction de parcours PP et notamment d'au moins un donnée caractéristique *pc₁...pc_{M}* du parcours actuel *ppa.* La prédiction de parcours PP comporte au moins une des deux étapes précédentes de chargement d'un modèle PREC_LD, et d'estimation du parcours actuel PA_CLC. La prédiction de parcours PP est notamment effectuée durant la phase de prédiction de parcours P_PRED.

Dans une première variante de l'invention, le procédé de réglage automatique effectue dans un premier temps un apprentissage automatique permettant de générer un modèle P_MD. Durant ce premier temps dit d'apprentissage, le réglage du moteur n'est pas adapté au parcours, par exemple il est réglé à une valeur par défaut. Dans un deuxième temps, le modèle n'est pas réévalué par le procédé de réglage automatique et est utilisé pour prédire des données caractéristiques du parcours actuel permettant au procédé de réglage automatique de commander un réglage adapté au parcours actuel du moteur en fonction de ce modèle.

Dans une deuxième variante de l'invention, chaque parcours est utilisé pour enrichir les connaissances du procédé de réglage automatique relativement au comportement du moteur, même les parcours pour lesquels un moteur est réglé automatiquement par le procédé de réglage automatique selon l'invention. Ainsi, lors d'un parcours actuels, toutes les données captées lors des parcours précédents sont utilisés pour affiner, optimiser le réglage automatique du moteur, notamment en affinant le modèle de comportement du moteur et/ou du véhicule.

Un mode de réalisation particulier du procédé de réglage automatique d'un moteur est un programme comprenant des instructions de code de programme pour l'exécution des étapes du procédé de réglage automatique lorsque ledit programme est exécuté par un processeur.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Moteur à réglage prédictif d'un véhicule comportant au moins un paramètre physique (fₖ) configuré à être réglé par un contrôleur (1) où le moteur est un moteur électrique (5') comportant un rotor (511) et un stator (512) séparé par un entrefer (513) , dont la largeur constitue le paramètre physique réglable; **caractérisé en ce que** le moteur est configuré à être réglé par ledit contrôleur (1) en fonction d'une donnée caractéristique prédite (pc₁..pc_{M}) du parcours actuel (pa) du véhicule, la donnée caractéristique du parcours actuel du véhicule étant prédite à partir de données (de) fournies par au moins un capteur (2₅) du moteur (5,5',5ᵢ) du véhicule.

2. Contrôleur (1) configuré à régler automatiquement au moins un paramètre physique d'un moteur (5,5',5i) d'un véhicule où le moteur est un moteur électrique (5') comportant un rotor (511) et un stator (512) séparé par un entrefer (513), et la largeur dudit entrefer (513) constitue le paramètre physique réglable; le contrôleur (1) **caractérisé en ce qu'**il est configuré à régler automatiquement ledit au moins un paramètre physique en fonction d'une donnée caractéristique prédite (pc₁..pc_{M}) du parcours actuel (pa) du véhicule, la donnée caractéristique du parcours actuel du véhicule étant prédite à partir de données (de) fournies par des capteurs (2₅) du moteur (5,5',5ᵢ) du véhicule.

3. Contrôleur selon la revendication 2, **caractérisé en ce que** le contrôleur (1) comporte au moins un transmetteur (101) de commande (cmd) de largeur de l'entrefer (fₖ) à un régulateur (50) installé dans le véhicule, la largeur commandée étant fonction d'une donnée caractéristique prédite (pc₁...pc_{M}) du parcours actuel (pa) du véhicule.

4. Procédé de réglage automatique d'un moteur d'un véhicule comportant un réglage (cmd(fₖ,vₖ)) d'au moins un paramètre physique (fₖ) du moteur du véhicule, où le moteur est un moteur électrique (5') comportant un rotor (511) et un stator (512) séparé par un entrefer (513), et la largeur dudit entrefer (513) constitue le paramètre physique réglable; le procédé **caractérisé en ce que** ledit réglage dudit au moins un paramètre physique du moteur est en fonction d'une donnée caractéristique prédite (pc₁..pc_{M}) du parcours actuel (pa) du véhicule, la donnée caractéristique du parcours actuel du véhicule étant prédite à partir de données (de) fournies par des capteurs (2₅) du moteur (5,5',5ᵢ) du véhicule.

5. Procédé de réglage automatique selon la revendication précédente, **caractérisé en ce que** la donnée caractéristique prédite (pc₁...pc_{M}) est fonction d'un historique (h) du moteur (5, 5',5i) associant ledit au moins un paramètre physique (fₖ) du moteur lors d'un parcours précédent (p) à au moins une donnée caractéristique (g,t,s) du parcours précédent (p).

6. Procédé de réglage automatique selon l'une quelconque des revendications 4 ou 5, **caractérisé en ce que** la donnée caractéristique (pc₁...pc_{M}) est prédite P_PRED en utilisant un modèle (pm) élaboré par apprentissage automatique (APP).

7. Procédé de réglage automatique selon la revendication précédente, **caractérisé en ce que** l'apprentissage automatique (APP) est réalisé à partir d'un historique (h) du moteur associant ledit au moins un paramètre (fₖ) du moteur lors d'un parcours précédent (p) à au moins une donnée caractéristique (g,t,s) du parcours précédent (p).

8. Procédé de réglage automatique selon l'une quelconque des revendications 4 à 7, **caractérisé en ce que** le procédé de réglage (MER) comporte une prédiction (PP) du parcours actuel du véhicule à partir de données (de) fournies par des capteurs (2₅) du moteur du véhicule.

9. Procédé de réglage automatique selon l'une quelconque des revendications 4 à 8, **caractérisé en ce que** le procédé de réglage automatique (MER) comporte une génération d'un historique (HGN) du moteur associant ledit au moins un paramètre physique (fₖ) du moteur lors d'un parcours précédent (p) à au moins une donnée caractéristique (g,t,s) du parcours précédent (p).

10. Procédé de réglage automatique selon la revendication précédente comportant un apprentissage automatique (APP) à partir de l'historique généré (h) fournissant un modèle (pm) de comportement du moteur.

11. Procédé de réglage automatique selon l'une quelconque des revendications 9 ou 10 comportant une estimation du parcours actuel (PP) en fonction de l'historique généré (h), le parcours actuel estimé (ppa) fournissant au moins la donnée caractéristique prédite (pc₁...pc_{M}) du parcours actuel (pa).

12. Procédé de réglage automatique selon l'une quelconque des revendications 9 à 11 **caractérisé en ce qu'**une donnée caractéristique (pc₁...pc_{M}) de parcours actuel comporte au moins un élément parmi les suivants :
vitesse du véhicule (s),
qualité de la route (qr),
type de tracé (t).

13. Programme comprenant des instructions de code de programme pour l'exécution des étapes du procédé de réglage automatique selon l'une quelconque des revendications 4 à 12 lorsque ledit programme est exécuté par un contrôleur selon la revendication 2.

## Patentansprüche

1. Motor mit prädiktiver Regelung eines Fahrzeugs, der mindestens einen physikalischen Parameter (fₖ) umfasst, der dazu konfiguriert ist, durch eine Steuerung (1) geregelt zu werden, wobei der Motor ein Elektromotor (5') ist, der einen Rotor (511) und einen Stator (512) umfasst, die durch einen Luftspalt (513) getrennt sind, dessen Breite den regelbaren physikalischen Parameter bildet; **dadurch gekennzeichnet, dass** der Motor dazu konfiguriert ist, in Abhängigkeit von einer vorhergesagten Kenngröße (pc₁..pc_{M}) der aktuellen Strecke (pa) des Fahrzeugs durch die Steuerung (1) geregelt zu werden, wobei die Kenngröße der aktuellen Strecke des Fahrzeugs anhand von Daten (dc) vorhergesagt wird, die durch mindestens einen Sensor (2₅) des Motors (5, 5', 5ᵢ) des Fahrzeugs bereitgestellt werden.

2. Steuerung (1), die dazu konfiguriert ist, mindestens einen physikalischen Parameter eines Motors (5, 5', 5ᵢ) eines Fahrzeugs automatisch zu regeln, wobei der Motor ein Elektromotor (5') ist, der einen Rotor (511) und einen Stator (512) umfasst, die durch einen Luftspalt (513) getrennt sind, und die Breite des Luftspalts (513) den regelbaren physikalischen Parameter bildet; wobei die Steuerung (1) **dadurch gekennzeichnet ist, dass** sie dazu konfiguriert ist, den mindestens einen physikalischen Parameter in Abhängigkeit von einer vorhergesagten Kenngröße (pc₁..pc_{M}) der aktuellen Strecke (pa) des Fahrzeugs automatisch zu regeln, wobei die Kenngröße der aktuellen Strecke des Fahrzeugs anhand von Daten (dc) vorhergesagt wird, die durch Sensoren (2₅) des Motors (5, 5', 5ᵢ) des Fahrzeugs bereitgestellt werden.

3. Steuerung nach Anspruch 2, **dadurch gekennzeichnet, dass** die Steuerung (1) mindestens einen Geber (101) zum Anweisen (cmd) einer Breite des Luftspalts (fₖ) für einen in dem Fahrzeug installierten Regler (50) umfasst, wobei die angewiesene Breite von einer vorhergesagten Kenngröße (pc₁...pc_{M}) der aktuellen Strecke (pa) des Fahrzeugs abhängt.

4. Verfahren zur automatischen Regelung eines Motors eines Fahrzeugs, das eine Regelung (cmd(fₖ,vₖ)) mindestens eines physikalischen Parameters (fₖ) des Motors des Fahrzeugs umfasst, wobei der Motor ein Elektromotor (5') ist, der einen Rotor (511) und einen Stator (512) umfasst, die durch einen Luftspalt (513) getrennt sind, und die Breite des Luftspalts (513) den regelbaren physikalischen Parameter bildet; wobei das Verfahren **dadurch gekennzeichnet ist, dass** die Regelung des mindestens einen physikalischen Parameters des Motors von einer vorhergesagten Kenngröße (pc₁..pc_{M}) der aktuellen Strecke (pa) des Fahrzeugs abhängt, wobei die Kenngröße der aktuellen Strecke des Fahrzeugs anhand von Daten (dc) vorhergesagt wird, die durch Sensoren (2₅) des Motors (5, 5', 5ᵢ) des Fahrzeugs bereitgestellt werden.

5. Automatisches Regelungsverfahren nach dem vorhergehenden Anspruch, **dadurch gekennzeichnet, dass** die vorhergesagte Kenngröße (pc₁...pc_{M}) von einer Historie (h) des Motors (5, 5', 5ᵢ) abhängt, die den mindestens einen physikalischen Parameter (fₖ) des Motors während einer vorhergehenden Strecke (p) mit mindestens einer Kenngröße (g, t, s) der vorhergehenden Strecke (p) in Beziehung setzt.

6. Automatisches Regelungsverfahren nach einem beliebigen der Ansprüche 4 oder 5, **dadurch gekennzeichnet, dass** die Kenngröße (pc₁...pc_{M}) unter Verwendung eines Modells (pm), das durch maschinelles Lernen (APP) erstellt wird, vorhergesagt wird, P_PRED.

7. Automatisches Regelungsverfahren nach dem vorhergehenden Anspruch, **dadurch gekennzeichnet, dass** das maschinelle Lernen (APP) anhand einer Historie (h) des Motors durchgeführt wird, die den mindestens einen Parameter (fₖ) des Motors während einer vorhergehenden Strecke (p) mit mindestens einer Kenngröße (g, t, s) der vorhergehenden Strecke (p) in Beziehung setzt.

8. Automatisches Regelungsverfahren nach einem beliebigen der Ansprüche 4 bis 7, **dadurch gekennzeichnet, dass** das Regelungsverfahren (MER) eine Vorhersage (PP) der aktuellen Strecke des Fahrzeugs anhand von Daten (dc), die durch Sensoren (2₅) des Motors des Fahrzeugs bereitgestellt werden, umfasst.

9. Automatisches Regelungsverfahren nach einem beliebigen der Ansprüche 4 bis 8, **dadurch gekennzeichnet, dass** das automatische Regelungsverfahren (MER) das Generieren einer Historie (HGN) des Motors, die den mindestens einen physikalischen Parameter (fₖ) des Motors während einer vorhergehenden Strecke (p) mit mindestens einer Kenngröße (g, t, s) der vorhergehenden Strecke (p) in Beziehung setzt, umfasst.

10. Automatisches Regelungsverfahren nach dem vorhergehenden Anspruch, das das maschinelle Lernen (APP) anhand der generierten Historie (h) umfasst, wodurch ein Verhaltensmodell (pm) des Motors bereitgestellt wird.

11. Automatisches Regelungsverfahren nach einem beliebigen der Ansprüche 9 oder 10, das das Berechnen der aktuellen Strecke (PP) in Abhängigkeit von der generierten Historie (h) umfasst, wobei die berechnete aktuelle Strecke (ppa) mindestens die vorhergesagte Kenngröße (pc₁...pc_{M}) der aktuellen Strecke (pa) bereitstellt.

12. Automatisches Regelungsverfahren nach einem beliebigen der Ansprüche 9 bis 11, **dadurch gekennzeichnet, dass** eine Kenngröße (pc₁...pc_{M}) einer aktuellen Strecke mindestens eines der folgenden Elemente umfasst:
Geschwindigkeit des Fahrzeugs (s),
Qualität der Straße (qr),
Art des Streckenverlaufs (t).

13. Programm, das Programmcodeanweisungen zur Ausführung der Schritte des automatischen Regelungsverfahrens nach einem beliebigen der Ansprüche 4 bis 12 beinhaltet, wenn das Programm durch eine Steuerung nach Anspruch 2 ausgeführt wird.

## Claims

1. Motor with predictive adjustment for a vehicle, including at least one physical parameter (fₖ) configured to be adjusted by a controller (1), wherein the motor is an electric motor (5') including a rotor (511) and a stator (512) separated by an airgap (513), the width of which forms the adjustable physical parameter; **characterized in that** the motor is configured to be adjusted by said controller (1) as a function of a predicted characteristic item of data (pc₁..pc_{M}) of the current route (pa) of the vehicle, the characteristic item of data of the current route of the vehicle being predicted based on data (dc) provided by at least one sensor (2₅) of the motor (5, 5', 5ᵢ) of the vehicle.

2. Controller (1) configured to automatically adjust at least one physical parameter of a motor (5, 5', 5ᵢ) of a vehicle, wherein the motor is an electric motor (5') including a rotor (511) and a stator (512) separated by an airgap (513), the width of said airgap (513) forming the adjustable physical parameter; the controller (1) being **characterized in that** it is configured to automatically adjust said at least one physical parameter as a function of a predicted characteristic item of data (pc₁..pc_{M}) of the current route (pa) of the vehicle, the characteristic item of data of the current route of the vehicle being predicted based on data (dc) provided by sensors (2₅) of the motor (5, 5', 5ᵢ) of the vehicle.

3. Controller according to Claim 2, **characterized in that** the controller (1) includes at least one transmitter (101) of airgap (fₖ) width commands to a regulator (50) installed in the vehicle, the commanded width being a function of a predicted characteristic item of data (pc₁..pc_{M}) of the current route (pa) of the vehicle.

4. Method for automatically adjusting a motor of a vehicle including adjustment (cmd(fₖ,vₖ)) of at least one physical parameter (fₖ) of the motor of the vehicle, wherein the motor is an electric motor (5') including a rotor (511) and a stator (512) separated by an airgap (513), the width of said airgap (513) forming the adjustable physical parameter; the method being **characterized in that** said adjustment of said at least one physical parameter of the motor is as a function of a predicted characteristic item of data (pc₁..pc_{M}) of the current route (pa) of the vehicle, the characteristic item of data of the current route of the vehicle being predicted based on data (dc) provided by sensors (2₅) of the motor (5, 5', 5ᵢ) of the vehicle.

5. Automatic adjustment method according to the preceding claim, **characterized in that** the predicted characteristic item of data (pc₁..pc_{M}) is a function of a history (h) of the motor (5, 5', 5ᵢ) associating said at least one physical parameter (fₖ) of the motor during a previous route (p) with at least one characteristic item of data (g, t, s) of the previous route (p).

6. Automatic adjustment method according to either one of Claims 4 and 5, **characterized in that** the characteristic item of data (pc₁..pc_{M}) is predicted P_PRED using a model (pm) worked out by machine learning (APP).

7. Automatic adjustment method according to the preceding claim, **characterized in that** the machine learning (APP) is carried out based on a history (h) of the motor associating said at least one parameter (fₖ) of the motor during a previous route (p) with at least one characteristic item of data (g, t, s) of the previous route (p).

8. Automatic adjustment method according to any one of Claims 4 to 7, **characterized in that** the adjustment method (MER) includes a prediction (PP) of the current route of the vehicle based on data (dc) provided by sensors (2₅) of the motor of the vehicle.

9. Automatic adjustment method according to any one of Claims 4 to 8, **characterized in that** the automatic adjustment method (MER) includes the generation of a history (HGN) of the motor associating said at least one physical parameter (fₖ) of the motor during a previous route (p) with at least one characteristic item of data (g, t s) of the previous route (p).

10. Automatic adjustment method according to the preceding claim, including machine learning (APP) based on the generated history (h) providing a behaviour model (pm) for the motor.

11. Automatic adjustment method according to either one of Claims 9 and 10, including an estimate of the current route (PP) as a function of the generated history (h), the estimated current route (ppa) providing at least the predicted characteristic item of data (pc₁..pc_{M}) of the current route (pa).

12. Automatic adjustment method according to any one of Claims 9 to 11, **characterized in that** a characteristic item of data (pc₁..pc_{M}) of the current route includes at least one element from the following:
vehicle speed (s),
road quality (qr),
route type (t).

13. Program comprising program code instructions for the execution of the steps of the automatic adjustment method according to any one of Claims 4 to 12 when said program is executed by a controller according to Claim 2.
